# EUROPÄISCHE PATENTSCHRIFT

(11) **EP 3 016 860 B1**
(45) Veröffentlichungstag und Bekanntmachung des Hinweises auf die Patenterteilung: **26.08.2020**
(21) Anmeldenummer: 14738753.4
(22) Anmeldetag: 26.06.2014
(51) Int. Cl.: B64D 11/06, B60N 2/22

(54) **FLUGZEUGSITZ MIT EINER VERSTELLEINRICHTUNG**
AIRPLANE SEAT WITH AN ADJUSTING DEVICE
SIÈGE D'AÉRONEF ÉQUIPÉ D'UN DISPOSITIF DE RÉGLAGE

(30) Priorität: 03.07.2013 DE 102013212976
(43) Veröffentlichungstag der Anmeldung: 11.05.2016
(73) Patentinhaber: Lufthansa Technik AG, 22335 Hamburg (DE)
(72) Erfinder: THOMASCHEWSKI, Oliver, 22846 Norderstedt (DE)
(74) Vertreter: Müller Verweyen
(86) Internationale Anmeldenummer: PCT/EP2014/063492
(87) Internationale Veröffentlichungsnummer: WO 2015/000782

(56) Entgegenhaltungen:
- EP-A1- 2 602 189
- WO-A1-02/16161
- WO-A1-2008/073028
- US-A1- 2006 103 212
- US-A1- 2010 031 761

## Beschreibung

Die Erfindung betrifft einen Flugzeugsitz mit einer Verstelleinrichtung, wobei der Flugzeugsitz mindestens ein verstellbares Sitzelement umfasst. Das Sitzelement weist einen verstellbaren und einen blockierten Zustand auf, wobei das Sitzelement nur in dem verstellbaren Zustand durch eine manuelle Krafteinwirkung und/oder eine Krafteinwirkung eines Federelements und/oder eine Krafteinwirkung der Gewichtskraft von Teilen des Flugzeugsitzes verstellbar ist. Die Verstelleinrichtung umfasst zumindest ein Bedienelement und mindestens ein Blockierelement. Das Blockierelement ist mittels des Bedienelements zwischen einer blockierenden Stellung, in welcher das Sitzelement blockiert ist, und einer neutralen Stellung, in welcher das Sitzelement verstellbar ist, bewegbar.

Flugzeugsitze mit verstellbaren Sitzelementen, wie beispielsweise Rückenlehnen, Armlehnen, Beinstützen oder Sitzflächen, sind allgemein bekannt. Die Verstellung ist eine relative Positions- und/oder Ausrichtungsänderung von zwei oder mehr Sitzelementen. Dies kann beispielsweise das Einstellen des Winkels einer Rückenlehne zu einer Sitzfläche oder das Hochstellen der Beinstütze gegenüber der Sitzfläche umfassen. Die Verstellung eines Sitzelements gegenüber einem weiteren Sitzelement kann durch eine Drehung um eine Achse, die Verschiebung entlang einer Achse oder die Verstellung entlang einer Trajektorie erfolgen. Weiterhin werden Sitzelemente, insbesondere die Sitzfläche, gegenüber einer Sitzbasis bzw. einem Sitzgestell verstellt, welches am Kabinenboden fixiert ist.

Die Verstellung von Sitzelementen wird durch Verstelleinrichtungen ermöglicht, welche die Relativbewegung von zwei oder mehr Sitzelementen eines Flugzeugsitzes zueinander in bestimmten Grenzen ermöglichen.

Flugzeugsitze mit normalem Komfortlevel, welche für eine möglichst dichte Bestuhlung in einem Flugzeug vorgesehen sind, weisen üblicherweise mechanische Verstelleinrichtungen für Sitzelemente auf, welche durch einen Sitzenden mittels eines Bedienhebels oder -knopfes aus einer blockierten Stellung gelöst werden können. Der Bedienhebel ist für die mechanische Übertragung der Entriegelungskraft mit Seilzügen, Gestängen oder mit Hydraulikleitungen mit der Verstelleinrichtung und einem entsprechenden Blockierelement verbunden.

Die mechanische Übertragung der Entriegelungskraft ist aufgrund der zu überbrückenden Strecken zwischen einem Bedienhebel, z.B. am Ende einer Armlehne, und einer Verstelleinrichtung, z.B. am Gelenk zwischen Sitzfläche und Rückenlehne, in der Ausführung aufwendig, um eine entsprechende Kraftübertragung von dem Bedienhebel zur Verstelleinrichtung zu ermöglichen. Weiterhin müssen mögliche Übergänge zwischen Sitzelementen und Richtungswechsel bei der Kraftübertragung mit engen Radien, z.B. am Übergang einer Armlehne an einer Rückenlehne, überbrückt werden. Derartige Übergänge können weiterhin als Gelenk ausgeführt sein, wodurch die mechanische Kraftübertragung ebenfalls aufwendig gelenkig ausgeführt werden muss und entsprechend viel Bauraum einnimmt, was die Gestaltungsfreiheit für die Flugzeugsitze stark einschränkt. Weiterhin können derartige Mechaniken stark reibungsbehaftet sein, so dass sie für einen Bediener insbesondere nach einer großen Lebensdauer schwergängig zu bedienen sind. Zur mechanischen Kraftübertragung können beispielsweise Bowdenzüge oder hydraulische Systeme angewendet werden.

Demgegenüber existieren Flugzeugsitze, welche elektrisch angetriebene Verstelleinrichtungen umfassen. Diese ermöglichen eine Verstellung von Sitzelementen durch Stellantriebe. Die Stellantriebe werden elektronisch angesteuert und können von einem Sitzenden mittels Steuertasten gesteuert werden. Der Winkel einer Rückenlehne zu einer Sitzfläche kann auf diese Weise beispielsweise elektrisch verstellt bzw. verändert werden. Die Stellantriebe sind so ausgelegt, dass ein oder mehrere Sitzelemente auch gegen das Gewicht eines Sitzenden verstellt werden können. Weiterhin müssen die Stellantriebe derart ausgelegt werden, dass sie in einem Crashfall die auftretenden Lasten sicher ertragen können. Die Stellmotoren sind aufgrund dieser Anforderungen schwer und auch teuer. Zudem schränkt die notwendige Größe der Stellmotoren die Gestaltungsfreiheit eines Flugzeugsitzes bei der Integration ein. Sofern an einem Flugzeugsitz mehrere verstellbare Sitzelemente vorgesehen sind, muss aufwendig sichergestellt werden, dass keine Kombination von Stellungen der Sitzelemente angefahren werden kann, welche einen Sitzenden einklemmen oder verletzen könnte. Das Dokument WO 02/16161 A1 offenbart einen Flugzeugsitz mit den Merkmalen des Oberbegriffs des Anspruchs 1.

Die Aufgabe der Erfindung ist es, eine Verstelleinrichtung für einen Flugzeugsitz anzugeben, der die oben genannten Nachteile überkommt.

Die Aufgabe der Erfindung wird ausgehend vom Oberbegriff des Anspruchs 1 in Verbindung mit dessen kennzeichnenden Merkmalen gelöst. Es wird ein Flugzeugsitz mit einer Verstelleinrichtung vorgeschlagen, wobei der Flugzeugsitz mindestens ein verstellbares Sitzelement umfasst. Das Sitzelement weist einen verstellbaren und einen blockierten Zustand auf, wobei das Sitzelement nur in dem verstellbaren Zustand durch eine manuelle Krafteinwirkung und/oder eine Krafteinwirkung eines Federelements und/oder eine Krafteinwirkung der Gewichtskraft von Teilen des Flugzeugsitzes verstellbar ist. Die Verstelleinrichtung umfasst zumindest ein Bedienelement und mindestens ein Blockierelement. Das Blockierelement ist mittels des Bedienelements zwischen einer blockierenden Stellung, in welcher das Sitzelement blockiert ist, und einer neutralen Stellung, in welcher das Sitzelement verstellbar ist, bewegbar. Erfindungsgemäß ist das Bedienelement ein elektronischer und/oder elektrischer Schalter, und das Blockierelement ist mittels eines elektrisch betriebenen, signaltechnisch von dem Schalter ansteuerbaren Stellers zwischen der blockierenden Stellung und der neutralen Stellung bewegbar.

Die notwendigen Kräfte für den Steller für das Bewegen der Blockiervorrichtung sind deutlich geringer als die notwendigen Kräfte eines Stellantriebs, wie er aus elektrisch verstellbaren Flugzeugsitzen bekannt ist, da der Steller das Sitzelement nicht verstellt, sondern lediglich zur Entriegelung des Blockierelements vorgesehen ist. Die Verstellung der Sitzelemente erfolgt durch den Passagier selbst bzw. durch passive Federelemente, wie z.B. Gasdruckfedern, Druckspeicher, Spiralfedern oder allgemein mit mechanischen Elementen mit entsprechender Rückstellkraft, welche durch einen Passagier in einfacher Weise übersteuert bzw. überdrückt werden können. Der Steller kann hierdurch sehr leicht und klein ausgeführt werden, was die Integration in einem Flugzeugsitz und dessen Gesamtgewicht positiv beeinflusst. Baugleiche Steller können an einer Vielzahl von Sitzelementen verwendet werden, da die Anforderung an Stellkraft und Stellweg unabhängig von der Ausgestaltung und Größe des zugehörigen, verstellbaren Sitzelements ist. Die Verwendung einer Vielzahl baugleicher Steller bietet neben einem Kostenvorteil auch den Vorteil einer vereinfachten Zulassung.

Ein elektronischer oder elektrischer Schalter kann klein und leicht ausgeführt werden, wodurch ein derartiger Schalter flexibler an einer Vielzahl von Montagepositionen an einem Flugzeugsitz angeordnet werden kann. Die Anbindung des Schalters an übrigen Komponenten der Verstelleinrichtung benötigt lediglich eine Kabelverbindung zur Übertragung von elektrischen Steuersignalen, so dass sich erhebliche Vorteile gegenüber mechanischen Übertragungswegen von einem Bedienhebel bezüglich Gewicht und Bauraum ergeben. Der Steller kann somit über die Kabelverbindung mit einem Signal von dem Schalter angesteuert werden. In möglichen Ausführungsformen kann das Signal auch zumindest teilweise kabellos übertragen werden.

In weiteren möglichen Ausführungsformen kann der Steller neben einem direkten mechanischen Anschluss an das Blockierelement auch über mechanische Kraftübertragung mit dem Blockierelement verbunden werden, wobei die Strecke zwischen Steller und Blockierelement deutlich kürzer gestaltet werden kann, als dies zwischen einem Bedienhebel und einem Blockierelement möglich ist. Der Steller kann direkt am Blockierelement oder in der Nähe, beispielsweise in einem Sitzelement, integriert angeordnet sein.

Im Gegensatz zu den allgemein bekannten elektrischen Verstelleinrichtungen mit großen Stellmotoren wird jedoch keine Verstellung von Sitzelementen von dem Steller vorgenommen. Vielmehr ermöglicht der Steller die Bewegung des Blockierelements, wodurch eine Verstellung eines Sitzelements durch einen sitzenden Passagier selbst erfolgen kann. Eine Verstellung in eine Richtung wird hierbei vorzugsweise über ein Federelement bewirkt, so dass sich der Flugzeugsitz von bestimmten Positionen aus bei neutraler Stellung des Blockierelements selbsttätig in eine Grundposition bewegt. Die gegenläufige Richtung kann durch den Körper des Passagiers erreicht werden. Der Passagier kann beispielsweise durch Krafteinwirkung auf bestimmte Sitzelemente des Flugzeugsitzes, z.B. drücken, ziehen oder durch Gewichtsverlagerung, die Sitzelemente bewegen und entsprechend verstellen. Die Krafteinwirkung des Passagiers erfolgt vorzugsweise entgegen der Krafteinwirkung eines Federelements, so dass der Passagier selbst das Federelement übersteuert. In weiteren Ausführungsformen kann jedoch auch auf die Verwendung eines Federelements verzichtet werden. Nach einer Verstellung eines oder mehrerer Sitzelemente kann der Steller das Blockierelement wieder in eine blockierende Stellung bewegen, so dass die verstellte Ausrichtung auch ohne Einwirkung des Passagiers erhalten bleibt.

Die Verwendung von Blockierelementen, welche die kinematische Beweglichkeit bzw. Verstellbarkeit von Sitzelementen gezielt blockieren können, und die Verwendung von elektronisch betriebenen Stellern, welche durch flexible anordenbare Schalter gesteuert werden können, ermöglichen einen besonders leichten Flugzeugsitz. Die Steller zur Bewegung des Blockierelements können vergleichsweise klein ausgeführt werden, da die Verstellung des Sitzelements nicht von ihnen ausgeführt wird und in einem Crashfall keine Lasten aus dem Sitzelement in den Steller eingeleitet werden. Die entsprechenden Lasten werden vielmehr durch das entsprechende Blockierelement getragen, welches beispielsweise als massives Metallteil derartige Lasten ertragen kann.

Eine detaillierte und nachweisbar sichere Programmierung von Verfahrwegen kann entsprechend entfallen, wie auch ein Sicherheitsnachweis über die Verfahrwege, da der Passagier manuell die Verstellung von Sitzelementen vornimmt und daher nicht auf dem Flugzeugsitz durch eine mögliche ungünstige Kombination von Stellungen der Sitzelemente eingeklemmt werden kann. Die Federelemente sind vorzugsweise so ausgelegt, dass die über ein Sitzelement auf einen Sitzenden eingeleiteten Kräfte kleiner sind als dessen typische manuelle Kraft, welche er in einer sitzenden Position auf ein Sitzelement ausüben kann.

In der neutralen Stellung des Blockierelements ist die Verstellbarkeit eines entsprechenden Sitzelements derart, dass das Sitzelement entsprechend einer vorgegebenen Kinematik, eines Gelenks und entlang einer Schiene bewegt werden kann. Als Federelement können beispielsweise Gasdruckfedern in dem Flugzeugsitz eingesetzt werden. Es können auch Schalterelemente vorgesehen sein, welche bei kurzzeitiger Betätigung ein oder mehrere Sitzelemente dauerhaft bis zu einer erneuten Betätigung freigeben.

Erfindungsgemäß umfasst die Verstelleinrichtung eine Übersteuerungsmechanik, wobei die Übersteuerungsmechanik eine manuelle Bewegung des Blockierelements zwischen der blockierenden und der neutralen Stellung ermöglicht.

Eine Übersteuerungsmechanik ist vorteilhaft, um das Einnehmen einer sicheren Sitzposition bei Ausfall eines oder mehrerer Steller oder der Stromversorgung an einem Flugzeugsitz zu ermöglichen. Die Verstelleinrichtung weist somit eine rein mechanische Redundanz auf, wodurch sichergestellt werden kann, dass der Flugzeugsitz immer in eine Sicherheitsstellung für kritische Phasen eines Flugzeugs, wie Start, Landung oder Rollen am Boden, gebracht werden kann. Die Übersteuerungsmechanik kann daher in vorteilhaften Ausführungsformen einen Wechsel des Blockierelements zwischen der blockierenden und der neutralen Stellung unabhängig von der Funktionsfähigkeit des entsprechenden Stellers ermöglichen.

In vorteilhaften Ausführungsformen weist die Übersteuerungsmechanik eine manuelle Bedienvorrichtung in einem Abstand von weniger als 15 cm zu einem Wirkbereich des Blockierelements auf.

Die Anordnung in direkter Nähe zu dem Blockierelement ermöglicht kurze mechanische Übertragungswege, wodurch die Übersteuerungsmechanik klein, leicht und ohne aufwendige Umlenkmechanismen möglich ist. Weiterhin kann die entsprechende Bedienvorrichtung aufgrund des Bezugs zu dem entsprechenden Gelenk in einfacher Weise an dem Flugzeugsitz durch einen Bediener gefunden werden. Die auftretenden ergonomischen Nachteile bei der Bedienung, die eine derartige Anordnung üblicherweise verhindern, werden hierbei bewusst akzeptiert, da es sich vornehmlich um eine Notfallfunktion handelt. Beispielsweise kann es möglich sein, dass die manuelle Bedienvorrichtung mit der Übersteuerungsmechanik vom Kabinenpersonal ausgelöst wird, wenn der entsprechende manuelle Zugriff für einen Sitzenden selbst nicht ohne aufzustehen zu erreichen ist.

Ein Wirkbereich ist als ein Bereich anzusehen, an dem ein Blockierelement eine blockierende Wirkung bzw. Kraft ausüben kann. Dies kann beispielsweise einen Formschluss und/oder Eingriff zur Verhinderung der Relativbewegung zweier Körper umfassen. Weiterhin können reibschlüssige Verbindungen als Wirkbereiche eines Blockierelements angesehen werden, wobei der Form- und/oder Reibschluss durch Bewegen des Blockierelements in eine neutrale Stellung aufgehoben werden kann. Vorteilhafterweise ist das Blockierelement dazu eingerichtet, sich bei einem Ausfall einer elektrischen Versorgung des elektrisch betriebenen Stellers automatisch in die blockierende Stellung zu bewegen.

Das Blockierelement weist vorzugsweise eine Grundstellung auf, in welcher es die Beweglichkeit eines zugeordneten Sitzelements blockiert. Der elektrisch betriebene Steller kann das Blockierelement entgegen einer Federkraft, welche durch eine entsprechende Feder bereitgestellt werden kann, in die neutrale Stellung bewegen, wodurch das Sitzelement beweglich wird. Fällt der Steller aufgrund eines Schadens oder mangelnder Stromversorgung aus, wird das Blockierelement automatisch durch die Federkraft in die blockierende Stellung bewegt, was sicherheitstechnisch vorteilhaft ist. Weiterhin kann in einer derartigen Anordnung ein energiesparender Betrieb der Verstelleinrichtung bei einer typischerweise blockierten Sitzstellung ermöglicht werden.

Erfindungsgemäß ist ein Blockierelement alternativ oder parallel durch mehrere Bedienelemente steuerbar. An dem Flugzeugsitz können mehrere Bedienelemente angeordnet sein, welche das gleiche Blockierelement steuern können. Auf diese Weise kann beispielsweise die Rückenlehne als Sitzelement eines Flugzeugsitzes an unterschiedlichen Bedienelementen bzw. Schaltern in ihrer Beweglichkeit gesteuert werden. So kann eine Person in einer sitzenden Position ein Bedienelement und in einer liegenden Position ein anderes Bedienelement verwenden.

Erfindungsgemäß sind mit einem Bedienelement mehrere Blockierelemente parallel oder alternativ steuerbar. Eine parallele Ansteuerung mehrerer Blockierelemente mittels der elektrisch betriebenen Steller ermöglicht die Verstellung mehrerer Sitzelemente eines Flugzeugsitzes in verschiedenen Kombinationen. Es können beispielsweise über die Betätigung eines Bedienelements die Blockierelemente für eine Beinstütze und eine Rückenlehne parallel angesteuert werden, so dass in einfacher Weise mit der Betätigung eines Betätigungselements eine liegende Sitzstellung eingenommen werden kann. Wahlweise können in vorteilhaften Ausführungsformen weitere Bedienelemente die Beweglichkeit der Beinstütze und der Rückenlehne getrennt freigeben. Vorzugsweise weist die Verstelleinrichtung eine Bedienkonsole auf, welche mehrere Bedienelemente umfasst. Dies ermöglicht eine Zusammenfassung der Sitzsteuerung für alle Verstelleinrichtungen des Flugzeugsitzes. Es können auch berührungssensitive Bildschirme als elektronische Schalter der Bedienelemente verwendet werden.

In vorteilhaften Ausführungsformen ist das Bedienelement in einer Armlehne des Flugzeugsitzes angeordnet. Dies ermöglicht einen einfachen Zugriff von einem Bediener, welche zusätzlich im Sichtfeld liegt.

In bevorzugten Ausführungsformen ist das verstellbare Sitzelement eine Rückenlehne, Beinstütze, Kopfstütze, Armlehne und/oder Sitzfläche.

Die Erfindung wird im Folgenden anhand bevorzugter Ausführungsformen unter Bezugnahme auf die beigefügten Figuren erläutert. Dabei zeigt:
- Fig. 1: einen Flugzeugsitz mit Verstelleinrichtungen;
- Fig. 2: einen Flugzeugsitz mit Übersteuerungsmechanik;
- Fig. 3: einen Flugzeugsitz mit weiteren Verstelleinrichtungen.

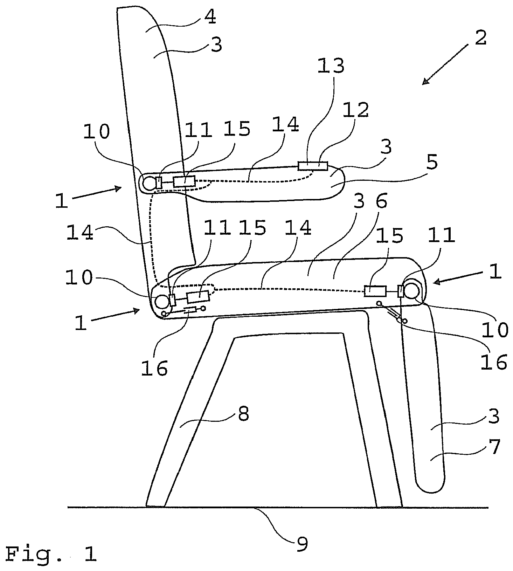

In Fig. 1 ist ein Flugzeugsitz 2 mit einer Rückenlehne 4, einer Armlehne 5, einer Sitzfläche 6 und einer Beinstütze 7 als Sitzelemente 3 gezeigt. Der Flugzeugsitz 2 ist mittels eines Gestells 8 am Kabinenboden 9 eines Flugzeugs befestigt. In diesem Ausführungsbeispiel sind drei Verstelleinrichtungen 1 im Flugzeugsitz 2 integriert, welche eine Verstellung der Armlehne 5 gegenüber der Rückenlehne 4, der Rückenlehne 4 gegenüber der Sitzfläche 6 und der Beinstütze 7 gegenüber der Sitzfläche 6 ermöglichen.

Die Verstellung der Sitzelemente 3 erfolgt in diesem Ausführungsbeispiel nur in Bezug auf den Winkel der Sitzelemente 3 zueinander, wobei allgemein auch andere Verstellmöglichkeiten, wie beispielsweise eine Verschiebung, möglich sind. Für die Verstellung sind entsprechende drehbare Gelenke 10 vorgesehen. Die Gelenke 10 sind in einer Grundstellung durch Blockierelemente 11 blockiert, welche die Verstellung, Relativbewegung und Beweglichkeit des entsprechenden Sitzelements 3 blockieren.

Der Flugzeugsitz 2 weist eine Bedienkonsole 12 mit mehreren Bedienelementen 13 auf, welche in diesem Ausführungsbeispiel auf der Armlehne 5 angeordnet ist. Die Bedienkonsole 12 kann beispielsweise ein berührungssensitiver Bildschirm sein, auf dem ein oder mehrere Bedienelemente 13 dargestellt und von einem Bediener angesteuert werden können. Die Bedienelemente 13 können auch einzelne mechanisch betätigbare Schalter sein, die ein elektrisches Signal schalten können.

Die Bedienkonsole 12 ist über elektrische Kabel 14 mit den elektrisch betriebenen Stellern 15 verbunden, welche mechanisch mit den entsprechenden Blockierelementen 11 verbunden sind.

Das Blockierelement 11 kann beispielsweise in eine korrespondierende Raste des Gelenks 10 eingedrückt werden, so dass das Blockierelement 11 die Beweglichkeit und Funktion des Gelenks 10 verhindert. Der Steller 15 kann das Blockierelement 11 aus dieser das Gelenk 10 blockierenden Stellung heraus in eine neutrale Stellung entgegen der Federkraft einer Feder ziehen, welche in dem Ausführungsbeispiel nicht dargestellt ist.

Der Steller 15 kann durch ein Bedienelement 13 gesteuert werden. Das Bedienelement 13 kann somit in unterschiedlichen Betriebsweisen kontinuierlich eine neutrale Stellung, kontinuierlich eine blockierte Stellung oder nur für die Zeitdauer der Betätigung eine blockierende oder neutrale Stellung des Blockierelements 11 steuern. Das Bedienelement 13 ist ein elektrischer und/oder elektronischer Schalter, welcher mindestens einen Steller 15 steuert. Unterschiedliche Kombinationen von Stellungen der Blockierelemente 11 können durch physische Implementierung von elektrischen Verbindungen und/oder mittels eines softwaregestützten Steuergerätes gesteuert werden.

Ein Bediener kann beispielsweise ein Bedienelement 13 betätigen, welches für die Dauer der Betätigung einen Steller 15 ansteuert. Dieser Steller 15 bewegt das Blockierelement 11 in eine neutrale Stellung, wodurch beispielsweise die Beweglichkeit der Rückenlehne 4 als verstellbares Sitzelement 3 gegenüber der Sitzfläche 6 ermöglicht werden kann.

An der Verstelleinrichtung 1 zwischen Rückenlehne 4 und Sitzfläche 6 ist ein Federelement 16 angeordnet, in diesem vorteilhaften Ausführungsbeispiel eine Gasdruckfeder, welche die Rückenlehne 4 im verstellbaren Zustand in eine aufrechte Sitzposition drückt. Die Rückenlehne 4 kann somit bei einer Betätigung des Bedienelements 13 selbsttätig eine aufrechte Position bzw. Stellung einnehmen oder durch die Krafteinwirkung eines Sitzenden entgegen dem Federelement 16 nach hinten in eine Liegeposition gebracht werden. Ein derartiger Flugzeugsitz 2 ist insbesondere für die Ausstattung einer VIP-Kabine eines Flugzeugs vorteilhaft. Der Flugzeugsitz 2 kann daher auch als VIP-Sitz genutzt werden.

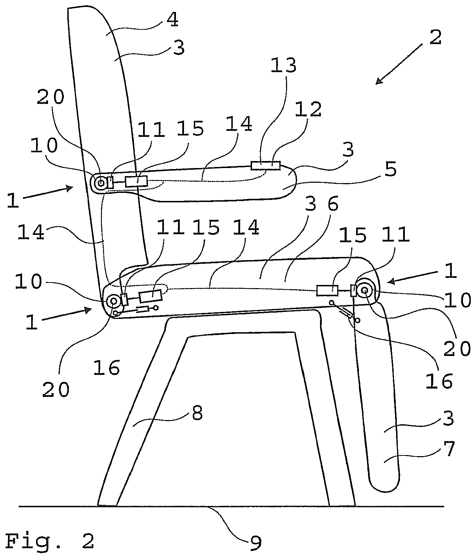

In Fig. 2 ist ein Ausführungsbeispiel eines Flugzeugsitzes 2 dargestellt, welcher gegenüber dem vorherigen Ausführungsbeispiel eine zusätzliche manuelle Bedienvorrichtung 20 umfasst. Die manuelle Bedienvorrichtung 20 ermöglicht einem Bediener eine Übersteuerungsmechanik zu nutzen, die in den Figuren nicht dargestellt ist. Diese ermöglicht den Wechsel zwischen einer blockierenden und neutralen Stellung des Blockierelements 11 unabhängig von der Betriebsfähigkeit des entsprechenden Stellers 15. Die manuelle Bedienvorrichtung 20 ist in diesem vorteilhaften Ausführungsbeispiel direkt am Gelenk 10 angeordnet. Die manuelle Bedienvorrichtung 20 ist in vorteilhaften Ausführungsbeispielen in direkter Umgebung des Blockierelements 11 angeordnet, so dass die Übersteuerungsmechanik klein und leicht ausgeführt werden kann. Die manuellen Bedienvorrichtungen 20 sind in diesem Ausführungsbeispiel für einen sitzenden Bediener nicht optimal zu erreichen, ermöglichen jedoch jederzeit den Flugzeugsitz 2 in eine sichere und definierte Sitzposition, welche für kritische Flugphasen, wie Start, Landung und Rollen, vorgeschrieben ist, einzustellen.

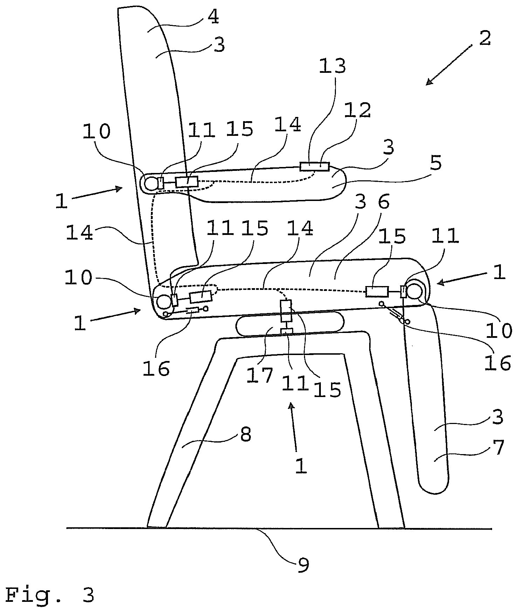

In Fig. 3 ist ein vorteilhaftes Ausführungsbeispiel gezeigt, bei welchem eine weitere Verstelleinrichtung 1 zwischen dem Gestell 8 des Flugzeugsitzes 2 und der Sitzfläche 6 als verstellbares Sitzelement 3 angeordnet ist. Die Verstelleinrichtung 1 weist eine Gleitschiene 17 auf, auf welcher die Sitzfläche 6 gegenüber dem Gestell 8 translatorisch bewegt werden kann. Die Beweglichkeit kann durch ein Blockierelement 11 blockiert werden, wobei wiederum ein weiterer, vorzugsweise baugleicher elektrisch angetriebener Steller 15 vorgesehen ist, welcher das Blockierelement 11 zwischen einer blockierenden und einer neutralen Stellung bewegen kann. Neben der dargestellten translatorischen Beweglichkeit bzw. Verstellbarkeit können auch komplexere Kinematiken oder Bewegungspfade zur Verstellung zwischen zwei oder mehr Sitzelementen 3 vorgesehen sein.

In möglichen Ausführungsbeispielen kann die Bewegung des Blockierelements 11 in eine neutrale Stellung nach der Einnahme einer Grundposition des Flugzeugsitzes 2 zentral in dem Flugzeug für eine Vielzahl von Sitzen elektronisch oder elektrisch gesperrt werden.

## Patentansprüche

1. Flugzeugsitz (2) mit einer Verstelleinrichtung (1), wobei der Flugzeugsitz (2) mindestens ein verstellbares Sitzelement (3) umfasst, wobei
- das Sitzelement (3) einen verstellbaren und einen blockierten Zustand aufweist, wobei
- das Sitzelement (3) nur in dem verstellbaren Zustand durch eine manuelle Krafteinwirkung und/oder eine Krafteinwirkung eines Federelements (16) und/oder eine Krafteinwirkung der Gewichtskraft von Teilen des Flugzeugsitzes (2) verstellbar ist, wobei
- die Verstelleinrichtung (1) zumindest ein Bedienelement (13) und mindestens ein Blöckierelement (11) umfasst, wobei
- das Blockierelement (11) mittels des Bedienelements (13) zwischen einer blockierenden Stellung, in welcher das Sitzelement (3) blockiert ist, und einer neutralen Stellung, in welcher das Sitzelement (3) verstellbar ist, bewegbar ist, wobei
- das Bedienelement (13) ein elektronischer und/oder elektrischer Schalter ist, und
- das Blockierelement (11) mittels eines elektrisch betriebenen, signaltechnisch von dem Schalter ansteuerbaren Stellers (15) zwischen der blockierenden Stellung und der neutralen Stellung bewegbar ist, wobei
- die Verstelleinrichtung (1) eine Übersteuerungsmechanik umfasst, wobei die Übersteuerungsmechanik eine manuelle Bewegung des Blockierelements (11) zwischen der blockierenden und der neutralen Stellung ermöglicht, **dadurch gekennzeichnet,**
- **dass** ein Blockierelement (11) alternativ oder parallel durch mehrere Bedienelemente (13) steuerbar ist und
- **dass** mit einem Bedienelement (13) mehrere Blockierelemente (11) parallel oder alternativ steuerbar sind.

2. Flugzeugsitz (2) nach Anspruch 1, **dadurch gekennzeichnet, dass** die Übersteuerungsmechanik eine manuelle Bedienvorrichtung (20) in einem Abstand von weniger als 15 cm zu einem wirkbereich des Blockierelements (11) aufweist.

3. Flugzeugsitz (2) nach einem der vorangehenden Ansprüche, **dadurch gekennzeichnet, dass** das Blockierelement (11) dazu eingerichtet ist, sich bei einem Ausfall einer elektrischen Versorgung des elektrisch betriebenen Stellers (15) automatisch in die blockierende Stellung zu bewegen.

4. Flugzeugsitz (2) nach einem der vorangehenden Ansprüche, **dadurch gekennzeichnet, dass** die Verstelleinrichtung (1) eine Bedienkonsole (12) aufweist, welche mehrere Bedienelemente (13) umfasst.

5. Flugzeugsitz (2) nach einem der vorangehenden Ansprüche, **dadurch gekennzeichnet, dass** das Bedienelement (13) in einer Armlehne (5) des Flugzeugsitzes (2) angeordnet ist.

6. Flugzeugsitz (2) nach einem der vorangehenden Ansprüche, **dadurch gekennzeichnet, dass** das verstellbare Sitzelement (3) eine Rückenlehne (4), Beinstütze (7), Kopfstütze, Armlehne (5) und/oder eine Sitzfläche (6) ist.

## Claims

1. Aircraft seat (2) comprising an adjusting device (1), the aircraft seat (2) comprising at least one adjustable seat element (3), wherein
- the seat element (3) having an adjustable state and a locked state, wherein
- the seat element (3) being adjustable by means of manual force application and/or force application by a spring element (16) and/or force application due to the weight of parts of the aircraft seat (2) only in the adjustable state, wherein
- the adjusting device (1) comprising at least one control element (13) and at least one locking element (11), wherein
- the locking element (11) being movable by means of the control element (13) between a locking position in which the seat element (3) is locked, and a neutral position in which the seat element (3) is adjustable, wherein
- the control element (13) is an electronic and/or electric switch, and
- the locking element (11) can be moved between the locking position and the neutral position by means of an electrically operated actuator (15) which can be actuated by means of signals from the switch, wherein
- the adjusting device (1) comprises an override mechanism, the override mechanism permitting manual movement of the locking element (11) between the locking position and the neutral position, **characterised in that**
- a locking element (11) can be controlled, alternatively or in parallel, by a plurality of control elements (13), and
- a plurality of locking elements (11) can be controlled in parallel or alternatively by means of one control element (13).

2. Aircraft seat (2) according to claim 1, **characterised in that** the override mechanism comprises a manual control device (20) at a distance of less than 15 cm from an effective region of the locking element (11).

3. Aircraft seat (2) according to any of the preceding claims, **characterised in that** the locking element (11) is configured so as to move automatically into the locking position in the event of failure of an electrical supply to the electrically operated actuator (15).

4. Aircraft seat (2) according to any of the preceding claims, **characterised in that** the adjusting device (1) comprises a control panel (12) which comprises a plurality of control elements (13).

5. Aircraft seat (2) according to any of the preceding claims, **characterised in that** the control element (13) is arranged in an armrest (5) of the aircraft seat (2).

6. Aircraft seat (2) according to any of the preceding claims, **characterised in that** the adjustable seat element (3) is a backrest (4), a leg rest (7), a headrest, an armrest (5) and/or a seat surface (6).

## Revendications

1. Siège d'aéronef (2) équipé d'un dispositif de réglage (1), le siège d'aéronef (2) comprenant au moins un élément de siège (3) réglable,
- l'élément de siège (3) présentant un état réglable et un état bloqué,
- l'élément de siège (3) pouvant être réglé uniquement dans l'état réglable par l'action d'une force manuelle et/ou l'action d'une force d'un élément à ressort (16) et/ou l'action d'une force du poids de parties du siège d'aéronef (2),
- le dispositif de réglage (1) comprenant au moins un élément de commande (13) et au moins un élément de blocage (11),
- l'élément de blocage (11) pouvant être déplacé au moyen de l'élément de commande (13) entre une position de blocage, dans laquelle l'élément de siège (3) est bloqué, et une position neutre, dans laquelle l'élément de siège (3) est réglable,
- l'élément de commande (13) étant un commutateur électronique et/ou électrique, et
- l'élément de blocage (11) pouvant être déplacé entre la position de blocage et la position neutre au moyen d'un actionneur (15) actionné électriquement, pouvant être commandé par le commutateur par signalisation,
dans lequel
- le dispositif de réglage (1) comprend un mécanisme de commande forcée, le mécanisme de commande forcée permettant un déplacement manuel de l'élément de blocage (11) entre la position de blocage et la position neutre, **caractérisé en ce que**
- un élément de blocage (11) peut être commandé alternativement ou parallèlement par plusieurs éléments de commande (13) et
- plusieurs éléments de blocage (11) peuvent être commandés parallèlement ou alternativement par un élément de commande (13).

2. Siège d'aéronef (2) selon la revendication 1, **caractérisé en ce que** le mécanisme de commande forcée comporte un dispositif de commande manuel (20) situé à une distance de moins de 15 cm d'une zone d'action de l'élément de blocage (11).

3. Siège d'aéronef (2) selon l'une des revendications précédentes, **caractérisé en ce que** l'élément de blocage (11) est conçu pour se déplacer automatiquement dans la position de blocage lors d'une panne d'une alimentation électrique de l'actionneur (15) actionné électriquement.

4. Siège d'aéronef (2) selon l'une des revendications précédentes, **caractérisé en ce que** le dispositif de réglage (1) comporte une console de commande (12), qui comprend plusieurs éléments de commande (13).

5. Siège d'aéronef (2) selon l'une des revendications précédentes, **caractérisé en ce que** l'élément de commande (13) est disposé dans un accoudoir (5) du siège d'aéronef (2).

6. Siège d'aéronef (2) selon l'une des revendications précédentes, **caractérisé en ce que** l'élément de siège (3) réglable est un dossier (4), un repose-jambes (7), un appui-tête, un accoudoir (5) et/ou une surface de siège (6).
